Europäisches Patentamt

European Patent Office

Office européen des brevets

(19)

(11) Numéro de publication: **0 219 404**
**B1**

(12) **FASCICULE DE BREVET EUROPEEN**

(45) Date de publication du fascicule du brevet:
**19.04.89**

(51) Int. Cl.⁴: **B23C 3/12**

(21) Numéro de dépôt: **86402097.9**

(22) Date de dépôt: **24.09.86**

(54) **Dispositif pour l'usinage intérieur d'un tube.**

(30) Priorité: **27.09.85 FR 8514351**

(43) Date de publication de la demande:
**22.04.87 Bulletin 87/17**

(45) Mention de la délivrance du brevet:
**19.04.89 Bulletin 89/16**

(84) Etats contractants désignés:
**BE CH DE GB IT LI NL**

(56) Documents cités:
**DE-C- 924 984**
**FR-A- 2 187 481**
**US-A- 1 912 419**
**US-A- 3 070 053**
**US-A- 3 844 007**

(73) Titulaire: **COMMISSARIAT A L'ENERGIE ATOMIQUE,
31/33, rue de la Fédération, F-75015 Paris(FR)**
Titulaire: **ELECTRICITE DE FRANCE Service National, 2,
rue Louis Murat, F-75008 Paris(FR)**

(72) Inventeur: **Rigoulot, Claude, 37, rue des Lieutenants
Chauveau, F-71100 Chalon sur Saone(FR)**

(74) Mandataire: **Mongrédien, André et al, c/o
BREVATOME 25, rue de Ponthieu, F-75008 Paris(FR)**

ACTORUM AG

## Description

La présente invention a pour objet un dispositif pour l'usinage intérieur d'un tube. Elle s'applique notamment pour l'usinage du bourrelet interne d'une soudure entre deux tubes de grande longueur.

Pour certaines applications telles que les échangeurs de chaleur, il est parfois nécessaire de disposer de tubes de très grande longueur habituellement constitués en soudant bout à bout plusieurs tubes de plus petite longueur. Pour les serpentins par exemple, ces tubes sont soumis à des pressions de quelques centaines de bars et à une température de plusieurs centaines de degrés Celsius.

Les techniques actuelles de soudure (TIG, faisceau d'électrons, ...) évitent difficilement la création d'un bourrelet de soudure à l'intérieur du tube au niveau de la jonction des deux tubes soudés.

Or, face aux conditions de fonctionnement précitées, ce bourrelet interne crée des concentrations de contrainte au niveau de ladite jonction qui sont nuisibles à la bonne tenue en fatigue du tube. En outre, lors de l'inspection des soudures au moyen de sondes, le bourrelet interne peut s'opposer à l'introduction desdites sondes, ou provoquer leur usure par frottement, ou encore gêner la progression continue des câbles d'alimentation de ces sondes en y induisant des signaux parasites. C'est pourquoi, il apparaît très avantageux d'usiner le bourrelet interne de la soudure entre les deux tubes.

Jusqu'à ce jour, deux techniques connues sont habituellement mises en œuvre pour usiner ledit bourrelet.

Une première technique consiste à monter un outil au bout d'une rallonge mise en rotation lors de l'usinage. Cette technique a pour principal inconvénient d'être inapplicable lorsque l'on est en présence de tubes de très grande longueur, la rallonge ne pouvant supporter le couple de torsion effectif lors de l'usinage. La rallonge soumise à la torsion peut alors être le lieu de vibrations de torsion incompatibles avec un usinage correct.

Une seconde technique consiste à pousser en une seule passe des éléments racleurs dans le tube ou bien à leur donner un mouvement de va-et-vient, le ou les passages assurant l'usinage du bourrelet. Le principal inconvénient de cette technique est que les éléments racleurs rayent l'intérieur du tube lors de leurs déplacements. Les rayures ainsi produites peuvent alors être le lieu de concentrations de contraintes gênantes et surtout peuvent favoriser la corrosion de l'intérieur du tube.

La présente invention vise à supprimer les inconvénients précités et a pour objet un dispositif pour l'usinage intérieur d'un tube, notamment de grande longueur, ledit usinage étant assuré par un outil dont la rotation, l'avance et le positionnement axial sont assurés par des moyens magnétiques.

Un autre but de l'invention consiste à proposer un dispositif permettant de réaliser un usinage en série et de bonne qualité de l'intérieur du tube (forme, état de surface, ...).

Selon l'invention, ces buts sont atteints grâce à un dispositif comportant:
– un ensemble mobile apte à être disposé dans le tube et comprenant une première partie pourvue d'au moins deux paliers aptes à assurer le centrage de l'ensemble mobile dans le tube et munie de deux rotors libres en rotation selon un axe longitudinal dudit ensemble mobile, et une seconde partie liée à coulissement radial avec la première partie et comportant un outil d'usinage monté libre en rotation selon un axe longitudinal de façon à être apte à usiner l'intérieur du tube, l'un desdits rotors entraînant l'outil d'usinage par l'intermédiaire d'un arbre de transmission et l'autre desdits rotors entraînant en rotation ladite seconde partie,
– un ensemble fixe disposé autour du tube et comprenant un premier et un second dispositifs magnétiques centrés chacun respectivement sensiblement autour du plan transversal médian de chaque rotor et établissant chacun un champ magnétique tournant apte à faire tourner les deux dits rotors et un troisième dispositif magnétique centré sensiblement autour du plan tranversal médian de l'outil de coupe et établissant un champ magnétique tournant apte à faire déplacer ladite seconde partie radialement par rapport à la première partie tout en tournant en phase avec la seconde partie.

Avantageusement, au moins un des trois dispositifs magnétiques comporte des aimants permanents mis en rotation autour du tube ou comprend un stator électromagnétique multipolaire disposé autour du tube.

Commodément, deux aimants sont disposés à proximité de l'extrémité libre de la seconde partie et deux détecteurs magnétiques sont disposés autour du tube de telle sorte que l'un des détecteurs repère la position longitudinale de l'ensemble mobile dans le tube en détectant un des aimants et que l'autre détecteur repère la position angulaire de la seconde partie en détectant l'autre aimant.

De façon avantageuse, deux butées cylindriques sont situées de part et d'autre de l'outil de coupe et ont un diamètre sensiblement inférieur ou égal à celui dudit outil.

De toute façon, l'invention sera mieux comprise en se référant à la description qui suit d'un exemple de mise en œuvre donné à titre illustratif et non limitatif, en référence aux figures annexées sur lesquelles:

– la figure 1 représente une vue schématique en coupe longitudinale du dispositif selon l'invention;
– la figure 2 représente, en perspective, la seconde partie de l'ensemble mobile;
– la figure 3 représente, en perspective, la pièce intermédiaire de l'ensemble mobile; et
– la figure 4 représente une vue schématique en coupe longitudinale du dispositif selon l'invention et des moyens mis en œuvre pour l'actionner.

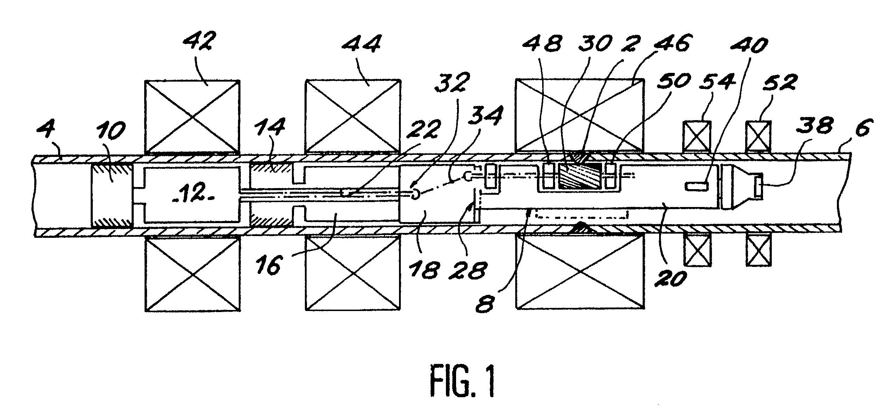

Le dispositif selon l'invention est représenté de façon simplifiée sur la figure 1. Ce dispositif a pour fonction d'usiner le bourrelet 2 de soudure entre deux tubes 4, 6 soudés bout à bout.

Le dispositif comprend tout d'abord un ensemble mobile 8 destiné à être enfilé dans les tubes 4, 6. Cet ensemble mobile 8 comporte successivement de gauche à droite sur la figure 1, un premier palier 10, un premier rotor 12, un second palier 14, un second rotor 16, une pièce intermédiaire 18 et une pièce porte-outil 20.

Les premier et second paliers 10, 14 servent de support de centrage de l'ensemble mobile 8 dans le tube 4. A cet effet, ils sont cylindriques et possèdent avantageusement une garniture élastique sur leur surface extérieure leur permettant de glisser dans le tube 4 sans le rayer tout en assurant leur fonction de centrage.

Le premier rotor 12 est supporté par les deux paliers 10, 14 et se trouve libre en rotation mais est fixe longitudinalement par rapport à ceux-ci. De la même façon, le second rotor 16 est supporté à rotation libre par le second palier 14 mais est fixe longitudinalement par rapport à celui-ci. Ces deux rotors 12, 16 sont cylindriques et d'un diamètre extérieur légèrement plus petit que celui des paliers, leur permettant une libre rotation dans le tube 4.

Un alésage 22 est formé dans le second palier 14 et le second rotor 16, suivant l'axe longitudinal de l'ensemble mobile.

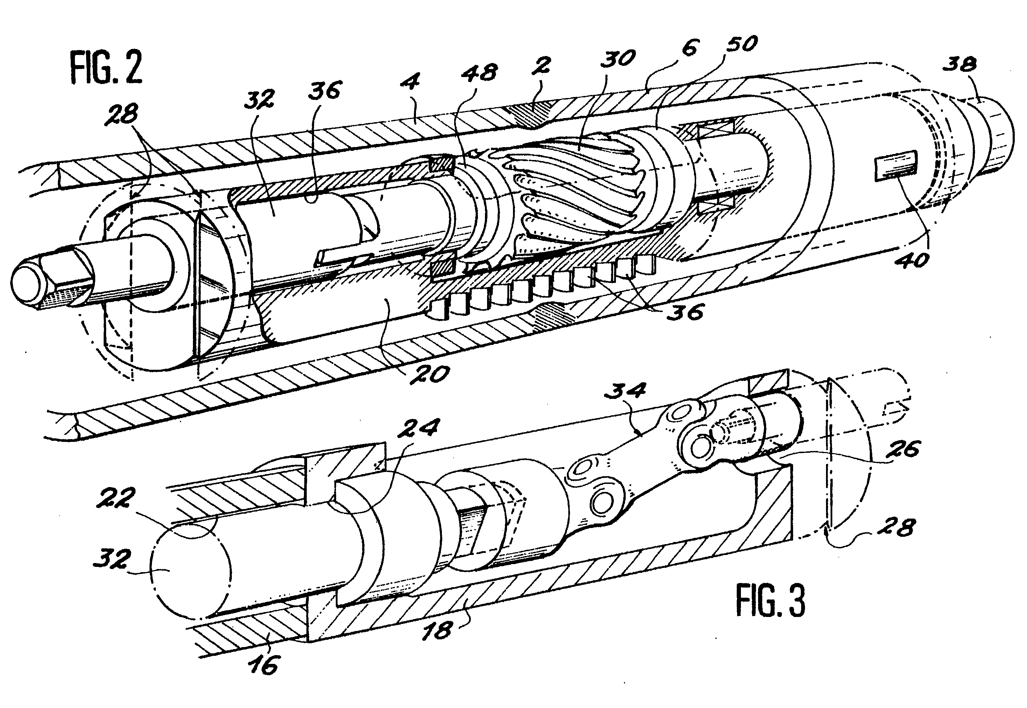

La pièce intermédiaire 18 est assujettie au second rotor 16 de façon à être entraînée en rotation par celui-ci. En se référant à la figure 3, cette pièce intermédiaire 18 est cylindrique, creuse et munie de deux orifices 24, 26 à ses extrémités. L'orifice 24, situé à gauche, est cylindrique et coaxial avec l'alésage 22 du second rotor 16 et l'orifice 26, situé à droite a la forme d'un trou oblong orienté radialement.

La pièce porte-outil 20 est supportée par la pièce intermédiaire 18 au travers par exemple d'une liaison tenon-mortaise 28 (représentée en traits mixtes sur les figures 2 et 3). La pièce porte-outil 20 est ainsi entraînée en rotation par ladite pièce intermédiaire 18 mais se trouve libre en translation radiale par rapport à celle-ci.

La pièce porte-outil 20 est de forme sensiblement cylindrique, mais d'un diamètre suffisamment petit pour autoriser sa translation radiale et sa rotation dans le tube 4.

Un espace est ménagé dans la partie médiane de la pièce 20 de telle façon qu'un outil tel qu'une fraise 30 est apte à y prendre place (figure 2). Cette fraise 30 est supportée en rotation longitudinale autour d'un axe parallèle à l'axe des rotors 12 et 16, par des paliers disposés dans la pièce 20 de telle manière que les dents de la fraise dépassent de la surface extérieure de ladite pièce 20, permettant ainsi un usinage interne du bourrelet 2.

Cette fraise 30 est entraînée en rotation par le premier rotor 12 par l'intermédiaire d'un arbre de transmission 32. Celui-ci, assujetti au premier rotor 12, traverse le second palier 14 et le second rotor 16 par leur alésage 22. Ledit arbre 32 débouche ensuite dans la pièce intermédiaire 18 par l'orifice 24 puis se trouve décalé de l'axe longitudinal de l'ensemble mobile par une liaison à cardan 34. L'arbre 32 passe au travers de l'orifice 26 oblong et est ensuite guidé en rotation par un alésage 36 ménagé dans la pièce porte-outil 20 pour être finalement assujetti à la fraise 30.

La fraise 30 est ainsi constamment entraînée en rotation par le premier rotor 12, quelle que soit la position radiale de la pièce porte-outil 20 par rapport à la pièce intermédiaire 18, et ceci grâce au cardan 34 et à l'orifice oblong 26 qui autorisent un certain débattement de l'arbre 32.

Des ailettes 36 disposées sur la pièce porte-outil 20 sensiblement à l'opposé de la fraise 30 permettent une évacuation des copeaux de coupe vers la droite sur la figure 2.

Un aimant 38 est disposé sur la face extrême de l'extrémité libre de la pièce porte-outil 20. Un autre aimant 40 est fixé sur la surface extérieure de ladite pièce 20 à proximité de son extrémité libre.

En se référant de nouveau à la figure 1, un ensemble fixe est disposé autour des tubes 4, 6. Cet ensemble comporte un premier dispositif magnétique 42 et un second dispositif magnétique 44 situés chacun sensiblement autour des plans transversaux médians respectifs aux premier 12 et second 16 rotors; un troisième dispositif magnétique 46 est situé sensiblement autour du plan transversal médian de la fraise 30.

Les premier 42 et second 44 dispositifs magnétiques sont chacun aptes à établir un champ magnétique tournant permettant la mise en rotation des deux rotors 12, 16 respectifs. Ces dispositifs sont par exemple des stators électromagnétiques multipolaires disposés autour du tube ou comprennent un ou des aimants permanents mis en rotation autour du tube par un moyen annexe.

Le troisième dispositif magnétique 46 peut être un stator multipolaire mais est commodément un aimant permanent entraîné en rotation par un moyen annexe, ledit aimant attirant vers lui la pièce porte-outil 20 et permettant ainsi d'appliquer avec une certaine force la fraise 30 sur le bourrelet 2.

Pour éviter que la fraise n'usine trop profondément le bourrelet, deux butées 48, 50 cylindriques sont disposées coaxialement de part et d'autre de la fraise 30 (figures 1 et 2) et possèdent un diamètre inférieur ou égal, voire supérieur lorsque l'on désire conserver une partie du bourrelet, à celui de la fraise 30, la différence des rayons des butées 48, 50 et de la fraise 30 correspondant à la profondeur de passe d'usinage désirée dans le tube.

Deux détecteurs magnétiques 52, 54 sont disposés autour du tube 6 de telle manière que l'un 52 des détecteurs repère la position longitudinale de l'ensemble mobile dans le tube en détectant l'aimant 38 et que l'autre détecteur 54 repère la position angulaire de la pièce porte-outil 20 en détectant l'aimant 40.

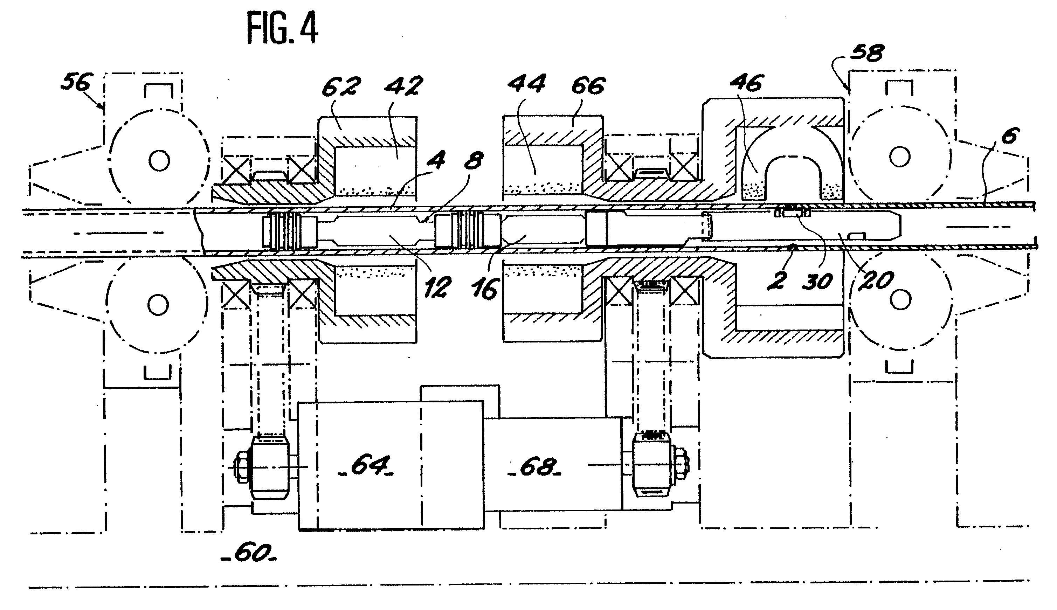

Une installation d'usinage comprenant le dispositif selon l'invention est représentée sur la figure 4.

Les deux tubes 4, 6 soudés sont positionnés par deux guides 56, 58 disposés à une certaine distance l'un de l'autre et supportés par un bâti 60. Chacun des guides 56, 58 comporte deux galets en vis-à-vis dont la gorge épouse la forme du tube, et qui s'appliquent avec une certaine force sur ces tubes. Des moyens (non représentés) d'entraînement de ces galets permettent de faire avancer les tubes 4, 6 à une position déterminée.

Entre ces deux guides 56, 58 prend place l'ensemble fixe permettant l'actionnement de l'ensemble mobile disposé dans les tubes 4, 6.

Le premier dispositif magnétique 42, un aimant permanent en l'occurence, est logé dans une pièce 62 cylindrique supportée libre en rotation selon un axe longitudinal sur le bâti 60. Un moteur 64 entraîne en rotation cette pièce 62 et donc l'aimant 42 par l'intermédiaire d'un train d'engrenages.

Le second et le troisième dispositifs magnétiques 44, 46, ici des aimants permanents, sont logés dans un support 66 cylindrique monté, libre en rotation selon un axe longitudinal sur le bâti 60. Un moteur 68 entraîne en rotation ce support 66 et donc les aimants 44, 46 par l'intermédiaire d'un train d'engrenages.

Le bâti 60, la pièce 62 et le support 66 sont arrangés de telle façon que les aimants 42, 44, 46 sont disposés longitudinalement dans une position leur permettant d'actionner respectivement les rotors 12, 16 et la pièce porte-outil 20. L'aimant 38 et le détecteur 52 coopèrent pour repérer cette position.

Le fonctionnement de l'installation d'usinage va à présent être décrit.

Les tubes 4, 6 soudés sont tout d'abord translatés par les deux guides 56, 58 jusqu'à ce que le bourrelet 2 de soudage soit à une position déterminée d'usinage. Puis l'ensemble mobile est introduit dans le tube 4, 6 jusqu'à ce que le détecteur 52 détecte l'aimant 38.

Le moteur 64 est alors actionné, faisant tourner l'aimant 42 qui entraîne magnétiquement le rotor 12. La fraise 30 est ainsi mise en rotation. Le moteur 68 est alors actionné, faisant tourner les aimants 44 qui entraînent magnétiquement le rotor 16 et mettent en rotation la pièce porte-outil 20. Simultanément, cette pièce 20 est attirée magnétiquement par l'aimant 46 qui tourne en phase avec l'aimant 44 et donc avec ladite pièce 20. La fraise 30 appliquée avec une certaine force contre le bourrelet 2, effectue l'usinage de celui-ci, l'avance étant déterminée par la rotation de la pièce porte-outil 20, jusqu'à ce que les deux butées 48, 50 soient en contact avec l'intérieur du tube 4. La fraise ne peut alors plus usiner. Pendant ce temps, les copeaux de coupe sont évacués vers la droite par les ailettes 36. L'aimant 40 et le détecteur 54 coopèrent pour repérer la position angulaire de la pièce porte-outil 20. On peut compter ainsi le nombre de tours d'usinage effectués et stopper les moteurs 64, 68 lorsque l'usinage du bourrelet est terminé.

On retire ensuite l'ensemble mobile, puis on fait avancer les tubes 4, 6 pour recommencer la même opération sur un autre raccord ou sur deux autres tubes.

Bien entendu, la description ci-dessus n'a été donnée qu'à titre d'exemple, toutes modifications dans les formes de réalisation peuvent être envisagées sans modifier le principe de l'invention.

On peut par exemple rajouter un second outil en série, celui-ci pouvant être une fraise, une meule ... Un canal interne à l'ensemble mobile pourrait amener un liquide de coupe ou de l'air sous pression chassant les copeaux. Les moyens de centrage du tube peuvent être de différentes natures: roulements, paliers lisses, etc.

On peut également envisager de supprimer la liaison tenon-mortaise 28. La pièce intermédiaire 18 comporterait alors une partie souple permettant une translation radiale de la pièce 20 tout en assurant un entraînement en rotation de cette même pièce 20.

## Revendications

1. Dispositif pour l'usinage intérieur d'un tube (4, 6), caractérisé en ce qu'il comporte :
   – un ensemble mobile (8) apte à être disposé dans le tube et comprenant une première partie pourvue d'au moins deux paliers (10, 14) aptes à assurer le centrage de l'ensemble mobile dans le tube et munie de deux rotors (12, 16) libres en rotation selon un axe longitudinal dudit ensemble mobile, et une seconde partie (20) liée à coulissement radial avec la première partie et comportant un outil d'usinage (30) monté libre en rotation selon un axe longitudinal de façon à être apte à usiner l'intérieur du tube, l'un (12) desdits rotors entraînant l'outil d'usinage (30) par l'intermédiaire d'un arbre de transmission (32) et l'autre (16) desdits rotors entraînant en rotation ladite seconde partie,
   – un ensemble fixe disposé autour du tube et comprenant un premier (42) et un second (44) dispositifs magnétiques centrés chacun respectivement sensiblement autour du plan transversal médian de chaque rotor et établissant chacun un champ magnétique tournant apte à faire tourner les deux dits rotors et un troisième dispositif magnétique (46) centré sensiblement autour du plan transversal médian de l'outil de coupe (30) et établissant un champ magnétique tournant apte à faire déplacer ladite seconde partie (20) radialement par rapport à la première partie tout en tournant en phase avec la seconde partie.

2. Dispositif selon la revendication 1, caractérisé en ce qu'au moins un des trois dits dispositifs magnétiques comporte des aimants permanents mis en rotation autour du tube.

3. Dispositif selon la revendication 1, caractérisé en ce qu'au moins un des trois dits dispositifs magnétiques comporte un stator électromagnétique multipolaire disposé autour du tube.

4. Dispositif selon l'une quelconque des revendications 1 à 3, caractérisé en ce que deux aimants (38, 40) sont disposés à proximité de l'extrémité libre de la seconde partie (20) et que deux détecteurs magnétiques (52, 54) sont disposés autour du tube de telle sorte que l'un (52) des détecteurs repère la position longitudinale de l'ensemble mobile dans le tube en détectant un (38) des aimants et que l'autre (54) détecteur repère la position angulaire de la seconde partie en détectant l'autre (40) aimant.

5. Dispositif selon l'une quelconque des revendications 1 à 4, caractérisé en ce que deux butées (48, 50) cylindriques sont situées de part et d'autre de l'outil de coupe (30) et ont un diamètre sensiblement inférieur ou égal à celui dudit outil.

## Patentansprüche

1. Vorrichtung für die Innenbearbeitung einer Röhre (4, 6), dadurch gekennzeichnet, daß sie enthält:

eine bewegliche Anordnung (8), die dazu eingerichtet ist, in der Röhre verstellt zu werden, und die einen ersten Abschnitt enthält, der mit wenigstens zwei Lagern (10, 14) versehen ist, die dazu eingerichtet sind, die Zentrierung der beweglichen Anordnung in der Röhre sicherzustellen, und die mit zwei Rotoren (12, 16) versehen sind, die in einer Längsachse der genannten beweglichen Anordnung frei drehbar sind, und die weiterhin einen zweiten Abschnitt (20) aufweist, der mit dem ersten Abschnitt radial verschiebbar verbunden ist und ein Bearbeitungswerkzeug (30) aufweist, das in einer Längsachse frei drehbar derart gelagert ist, daß es die Röhre von innen bearbeiten kann, wobei einer (12) der genannten Rotoren das Bearbeitungswerkzeug (30) mittels einer Übertragungswelle (32) antreibt und der andere (16) der genannten Rotoren den zweiten Abschnitt in Drehung versetzt,
eine feste Anordnung, die um die Röhre angeordnet ist und die eine erste (42) und eine zweite (44) magnetische Einrichtung enthält, die jeweils im wesentlichen um die Transversalmittenebene eines jeden Rotors zentriert sind und die jeweils ein magnetisches Drehfeld erzeugen, das dazu eingerichtet ist, die genannten Rotoren in Drehung zu versetzen, und eine dritte magnetische Einrichtung (46), die im wesentlichen um die Mittenquerebene des Schneidewerkzeugs (30) zentriert ist und ein magnetisches Drehfeld erzeugt, das dazu eingerichtet ist, den genannten zweiten Abschnitt (20) radial gegenüber dem ersten Abschnitt zu verstellen, wobei er gleichphasig mit dem zweiten Abschnitt dreht.

2. Vorrichtung nach Anspruch 1, dadurch gekennzeichnet, daß wenigstens eine der drei genannten magnetischen Vorrichtungen Permanentmagnete enthält, die um die Röhre in Drehung versetzt sind.

3. Vorrichtung nach Anspruch 1, dadurch gekennzeichnet, daß wenigstens eine der drei genannten magnetischen Vorrichtungen einen mehrpoligen elektromagnetischen Stator aufweist, der um die Röhre angeordnet ist.

4. Vorrichtung nach einem der Ansprüche 1 bis 3, dadurch gekennzeichnet, daß zwei Magnete (38, 40) nahe dem freien Ende des zweiten Abschnitts (20) angeordnet sind, und daß zwei magnetische Detektoren (52, 54) um die Röhre derart angeordnet sind, daß einer (52) der Detektoren die Längsposition der beweglichen Anordnung in der Röhre ermittelt, indem er einen (38) der Magnete detektiert, und daß der andere Detektor (54) die Winkelposition des zweiten Abschnitts ermittelt, indem er den anderen Magnet (40) detektiert.

5. Vorrichtung nach einem der Ansprüche 1 bis 4, dadurch gekennzeichnet, daß zwei zylindrische Anschläge (48, 50) zu beiden Seiten des Schneidewerkzeugs (30) angeordnet sind und einen Durchmesser aufweisen, der geringfügig kleiner oder gleich dem des Werkzeugs ist.

## Claims

1. Device for the internal machining of a tube (4, 6), characterized in that it comprises a mobile assembly (8) which can be positioned in the tube and has a first part with at least two bearings (10, 14) able to ensure the centring of the mobile assembly in the tube and provided with two rotors (12, 16) which freely rotate along a longitudinal axis of said mobile assembly, and a second part (20) linked in radial sliding with the first part and having a machining tool (30) mounted so as to rotate freely along a longitudinal axis so that it can machine the interior of the tube, one (12) of the said rotors driving the machining tool (30) via a transmission shaft (32) and the other (16) of the said rotors rotates the second part and a fixed assembly arranged around the tube and comprising first (42) and second (44) magnetic devices, each centred respectively substantially about the median transverse plane of each rotor and each establishing a rotary magnetic field able to rotate said two rotors and a third magnetic device (46) centred substantially about the median transverse plane of the cutting tool (30) and establishing a rotary magnetic field able to displace the second part (20) radially with respect to the first part, whilst rotating in phase with the second part.

2. Device according to claim 1, characterized in that at least one of the three magnetic devices has permanent magnets rotated about the tube.

3. Device according to claim 1, characterized in that at least one of the three magnetic devices has a multipole electromagnetic stator arranged around the tube.

4. Device according to any one of the claims 1 to 3, characterized in that two magnets (38, 40) are located in the vicinity of the free end of the second part (20) and in that two magnetic detectors (52, 54) are positioned around the tube in such a way that one (52) of the detectors marks the longitudinal position of the mobile assembly in the tube by detecting one (38) of the magnets and the other (54) detector marks the angular position of the second part by detecting the other (40) magnet.

5. Device according to any one of the claims 1 to 4, characterized in that two cylindrical abutments (48, 50) are located on either side of the cutting tool (30) and have a diameter equal to or less than that of said tool.

FIG. 1

FIG. 2

FIG. 3

EP 0 219 404 B1

FIG. 4